(19) Europäisches Patentamt / European Patent Office / Office européen des brevets

(11) **EP 4 170 184 A1**

(12) **EUROPEAN PATENT APPLICATION**
published in accordance with Art. 153(4) EPC

(43) Date of publication:
**26.04.2023 Bulletin 2023/17**

(21) Application number: **22839973.9**

(22) Date of filing: **22.08.2022**

(51) International Patent Classification (IPC):
**F04D 29/40** (2006.01)   **F04D 29/66** (2006.01)
**G06F 1/20** (2006.01)

(86) International application number:
**PCT/CN2022/113837**

(87) International publication number:
**WO 2023/035915 (16.03.2023 Gazette 2023/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.09.2021   CN 202111070740**

(71) Applicant: **Honor Device Co., Ltd.
Shenzhen, Guangdong 518040 (CN)**

(72) Inventors:
• **YANG, Tao**
  **Shenzhen, Guangdong 518040 (CN)**
• **HUO, Guoliang**
  **Shenzhen, Guangdong 518040 (CN)**
• **ZHANG, Shaohui**
  **Shenzhen, Guangdong 518040 (CN)**
• **LI, Kuang**
  **Shenzhen, Guangdong 518040 (CN)**

(74) Representative: **Epping - Hermann - Fischer
Patentanwaltsgesellschaft mbH
Schloßschmidstraße 5
80639 München (DE)**

(54)   **FAN APPARATUS AND ELECTRONIC DEVICE**

(57)   Embodiments of this application provide a fan apparatus and an electronic device. The fan apparatus includes a first housing, a second housing, a fan blade unit, and a fence member located in the first housing. The fan blade unit is rotatably disposed in an accommodating cavity in the first housing. The fence member is located on a circumferential outer side of the fan blade unit. The second housing is covered on the first housing and the fence member, and encloses at least one resonant cavity together with the first housing and the fence member. The resonant cavity communicates with the accommodating cavity through a muffling hole on a cavity wall. Air in the resonant cavity resonates under excitation by an airflow of the fan blade unit. The fan apparatus of this application helps alleviate a noise problem caused by a fan with a high rotational speed, without affecting a heat dissipation effect of an existing electronic device.

FIG. 5

## Description

This application claims priority to Chinese Patent Application No. 202111070740.9, filed with the China National Intellectual Property Administration on September 13, 2021 and entitled "FAN APPARATUS AND ELECTRONIC DEVICE", which is incorporated herein by reference in its entirety.

## TECHNICAL FIELD

This application relates to the field of electronic technologies, and in particular, to a fan apparatus and an electronic device.

## BACKGROUND

With the development of science and technology, a notebook computer has become the most important tool for productivity in people's daily work, and its heat dissipation function directly affects performance of the product

At present, to achieve a good heat dissipation effect, a fan with a high rotational speed (for example, a rotational speed of 6000 rpm to 8000 rpm) is usually used in a notebook computer. The fan with a high rotational speed can discharge as much heat inside the notebook computer as possible to the outside, to achieve good heat dissipation. Although such practice can improve heat dissipation performance of the notebook computer, the fan with a high rotational speed causes a noise interference problem during operation, affecting people's experience on the product.

A noise eliminating function of the fan with a high rotational speed has become one type of core competitiveness of the notebook computer. Therefore, how to reduce noise generated by the fan with a high rotational speed has become an urgent problem to be resolved.

## SUMMARY

This application provides a fan apparatus and an electronic device, to help alleviate a noise problem caused by a fan with a high rotational speed, without affecting a heat dissipation effect of an existing electronic device.

A first aspect of embodiments of this application provides a fan apparatus. The fan apparatus includes a first housing, a second housing, a fan blade unit, and a fence member located in the first housing, where the first housing has an accommodating cavity, the fan blade unit is rotatably disposed in the accommodating cavity, and the fence member is located on a circumferential outer side of the fan blade unit; and the second housing is covered on the first housing and the fence member, the second housing encloses at least one resonant cavity together with the first housing and the fence member, a cavity wall of the resonant cavity has a muffling hole, the resonant cavity communicates with the accommodating cavity through the muffling hole, and air in the resonant cavity resonates under excitation by an airflow of the fan blade unit.

In this embodiment of this application, the fence member is disposed in the first housing of the fan apparatus, and the fence member is disposed on the circumferential outer side of the fan blade unit. When the second housing is covered on the first housing and the fence member, the fence member encloses at least one resonant cavity together with the first housing and the second housing. In addition, the resonant cavity can communicate, through the muffling hole in the cavity wall, with the accommodating cavity for disposing the fan blade unit in the first housing. In this way, the air in the resonant cavity resonates under excitation by the airflow generated by the fan blade unit, and noise generated in an air duct of the fan apparatus is eliminated at the muffling hole. Further, a noise problem caused by the fan apparatus such as a fan with a high rotational speed is alleviated without affecting an air volume of the fan apparatus, so as to ensure a heat dissipation effect of the fan apparatus.

In an optional implementation, the resonant cavity is a Helmholtz resonant cavity.

In this way, characteristics of the Helmholtz resonant cavity may be used to eliminate noise that is generated by the fan apparatus and that has a frequency same as a resonant frequency of the resonant cavity, thereby alleviating the noise problem caused by the fan apparatus such as a fan with a high rotational speed.

In an optional implementation, a plurality of resonant cavities are continuously arranged on the circumferential outer side of the fan blade unit.

In this way, without affecting the air volume of the fan apparatus, a noise reduction level for the noise in the air duct of the fan apparatus is increased, and further noise at different frequencies in the air duct of the fan apparatus is eliminated by using the plurality of resonant cavities, so that one fan apparatus can eliminate multi-spectral noise.

In an optional implementation, a portion of the fence member that faces the fan blade unit is a retaining wall having an opening at one end, and a shape of the retaining wall adapts to a sidewall structure of the first housing.

In this way, with the retaining wall disposed, the plurality of continuously arranged resonant cavities can be formed in the fan apparatus, and further the airflow in the fan apparatus can outflow from the opening of the retaining wall, so as to improve heat dissipation efficiency of the fan apparatus.

In an optional implementation, the fence member includes a fence portion and a plurality of partition portions, a spacing exists between the fence portion and an inner sidewall of the first housing, and the plurality of partition portions are connected between the fence portion and the inner sidewall of the first housing to partition a space jointly enclosed by the fence portion, the first housing, and the second housing into a plurality of continuous resonant cavities.

In this way, a plurality of resonant cavities can be enclosed by using the partition portions and the fence portion together with the first housing and the second housing on the circumferential outer side of the fan blade unit. This can help eliminate the noise at different frequencies in the air duct of the fan apparatus without affecting the air volume of the fan apparatus.

In an optional implementation, the plurality of resonant cavities have a same volume.

In this way, the noise reduction level for the noise in the air duct of the fan apparatus is increased without affecting the air volume of the fan apparatus.

In an optional implementation, the plurality of resonant cavities have different volumes to correspond to resonant frequencies of the resonant cavities at different rotational speeds of the fan blade unit.

In this way, the noise at different frequencies generated by the fan blade unit at different rotational speeds can be eliminated without affecting the air volume of the fan apparatus, so that one fan apparatus can eliminate multi-spectral noise.

In an optional implementation, the fence portion is a retaining wall that has an opening at one end and that adapts to the sidewall structure of the first housing.

In this way, with the fence portion disposed, a space in the first housing can be partitioned, so that the plurality of continuously arranged resonant cavities are formed in the fan apparatus, and further normal outflow of the airflow in the fan apparatus is not affected.

In an optional implementation, the plurality of partition portions are spaced between the fence portion and the inner sidewall of the first housing.

In this way, the plurality of continuously arranged resonant cavities can be formed on the circumferential outer side of the fan blade unit, and further the resonant frequencies of the resonant cavities can be adjusted, so that one fan apparatus can eliminate multi-spectral noise.

In an optional implementation, two adjacent partition portions have a same or different spacings. In this way, a plurality of resonant cavities that have a same or different volumes can be formed. In an optional implementation, the partition portions are connected to the inner sidewall of the first housing and a side of the second housing that faces the first housing in a sealing manner. This can help form the resonant cavities.

In an optional implementation, the muffling hole is disposed on a cavity wall of the resonant cavity that faces the fan blade unit.

In this way, the resonant cavity can communicate with the accommodating cavity through the muffling hole, to eliminate the noise generated in the air duct of the fan apparatus at the muffling hole, so that the fan apparatus has a noise reduction function.

In an optional implementation, the muffling hole is located at a central location of the resonant cavity, or the muffling hole is disposed deviating from the central location of the resonant cavity. In this way, by controlling a location of the muffling hole on the resonant cavity, the resonant frequency of the resonant cavity can be adjusted without changing the volume of the resonant cavity.

In an optional implementation, the first housing and the second housing are sequentially arranged along an axial direction of the fan blade unit.

In this way, the second housing can be covered on the first housing to form the resonant cavity, so that the fan apparatus has the noise reduction function, and further the fan apparatus can have more diversified structures.

In an optional implementation, the resonant cavity and the fan blade unit are located on a same side of the first housing.

This enables the fan apparatus to have the noise reduction function, and helps flatten the fan apparatus, without affecting the air volume of the fan apparatus.

In an optional implementation, the first housing is provided with a first mounting cavity; the fence member is located in the first mounting cavity; a space, in the first mounting cavity, on a side of the fence member that faces the fan blade unit forms the accommodating cavity; and a space, in the first mounting cavity, on a side of the fence member that faces away from the fan blade unit forms the resonant cavity together with the second housing.

In this way, the noise problem caused by the fan apparatus such as a fan with a high rotational speed can be alleviated by using the resonant cavity, and further the fan apparatus can be flattened, without affecting a rotational speed and the air volume of the fan apparatus.

In an optional implementation, the muffling hole is a through hole on the fence portion of the fence member.

In this way, the resonant cavity can communicate with the accommodating cavity through the muffling hole, so that the noise generated in the air duct of the fan apparatus can be eliminated at the muffling hole, and further the resonant frequency of the resonant cavity can be adjusted.

In an optional implementation, the resonant cavity and the fan blade unit are located on two opposite sides of the first housing.

This enables the fan apparatus to have the noise reduction function, and enables the fan apparatus to have more diversified structures.

In an optional implementation, the first housing is provided with a second mounting cavity, the fence member is located in the second mounting cavity, and the second mounting cavity and the accommodating cavity are located on two opposite sides of the first housing.

In this way, while the noise problem caused by the fan apparatus such as a fan with a high rotational speed is alleviated so that the fan apparatus has the noise reduction function, the resonant frequency of the resonant cavity can be adjusted so that one fan apparatus can eliminate multi-spectral noise, and further the fan apparatus can be more diversified.

In an optional implementation, the muffling hole is a through hole on a cavity wall on a side of the resonant cavity that faces the fan blade unit, and the second mounting cavity communicates with the accommodating cavity through the muffling hole.

In this way, the air in the resonant cavity resonates under excitation by the airflow generated by the fan blade unit, without affecting the rotational speed and the air volume of the fan apparatus, and further the noise generated in the air duct of the fan apparatus is eliminated, so that the fan apparatus has the noise reduction function.

In an optional implementation, the first housing is provided with an air outlet on a side of the fan blade unit, and the fence member is located on a side of the fan blade unit that is away from the air outlet.

In this way, the fence member forms the resonant cavity together with the first housing and the second housing without affecting the outflow of the airflow in the fan apparatus.

In an optional implementation, the fan apparatus is further provided with an air inlet on a same side as the fan blade unit, the air inlet communicates with the accommodating cavity, and an included angle exists between the air inlet and the air outlet.

This can help flatten the fan apparatus while ensuring the heat dissipation effect of the fan apparatus.

In an optional implementation, the fan apparatus further includes a sound insulation film disposed on a cavity wall of the resonant cavity, and the sound insulation film is covered on an end of the muffling hole that faces the fan blade unit.

In this way, on the basis of the resonant cavity, the fan apparatus can have a better noise reduction effect with reference to a noise reduction manner of the sound insulation film.

In an optional implementation, the resonant cavity is further provided with a sound absorbing member, and the sound absorbing member is filled in the resonant cavity or the sound absorbing member is disposed on a cavity wall of the resonant cavity.

In this way, on the basis of the resonant cavity, the fan apparatus can have a better noise reduction effect with reference to a noise reduction manner of the sound absorbing member.

A second aspect of the embodiments of this application provides an electronic device. The electronic device includes a housing and the fan apparatus according to any one of the foregoing implementations. The fan apparatus is disposed in the housing.

In this way, with the fan apparatus disposed in the housing of the electronic device, lightening and thinning and heat dissipation of the electronic device can be implemented, and experience comfort of the electronic device can be improved.

**BRIEF DESCRIPTION OF DRAWINGS**

FIG. 1 is a schematic diagram of a structure of a notebook computer according to an embodiment of this application;
FIG. 2 is an internal schematic diagram of a notebook computer according to an embodiment of this application;
FIG. 3 is a schematic diagram of a structure of a base bottom of a notebook computer according to an embodiment of this application;
FIG. 4 is a schematic diagram of a structure of a fan apparatus according to an embodiment of this application;
FIG. 5 is an exploded view of a fan apparatus according to an embodiment of this application;
FIG. 6 is a schematic diagram of a structure of a cover of a fan apparatus according to an embodiment of this application;
FIG. 7 is an internal schematic diagram of a fan apparatus according to an embodiment of this application;
FIG. 8 is an enlarged schematic diagram of a portion A of the fan apparatus in FIG. 7;
FIG. 9 is a schematic diagram of a structure of another fan apparatus according to an embodiment of this application;

FIG. 10 is an exploded view of another fan apparatus from a first visual angle according to an embodiment of this application;

FIG. 11 is an exploded view of another fan apparatus from a second visual angle according to an embodiment of this application;

FIG. 12 is a schematic diagram of the fan apparatus in FIG. 9 that is partially split;

FIG. 13 is an internal schematic diagram of the fan apparatus in FIG. 9 from a first visual angle;

FIG. 14 is an internal schematic diagram of the fan apparatus in FIG. 9 from a second visual angle; and

FIG. 15 is an enlarged schematic diagram of a portion B of the fan apparatus in FIG. 14.

Description of reference numerals:

100: notebook computer; 10: screen member; 11: top cover; 12: display; 13: first bezel; 20: base; 21: bottom housing; 211: air inlet region; 212: air outlet region; 22: second bezel; 23: keyboard; and 24: touch panel;

30: fan apparatus; 31: air inlet; 32: air outlet; 33: first housing; 331: air outlet passage; 332: fence member; 3321: fence portion; 3322: partition portion; 333: limiting block; 334: sealing surface; 335: air duct; 34: second housing; 341: notch; 35: third housing; 36: fan blade unit; 37: first mounting cavity; 371: accommodating cavity; 372: resonant cavity; 3721: muffling hole; 38: second mounting cavity; and 39: assembly hole; and

40: heat sink; 50: heat pipe; 60: heat dissipation plate; and 70: support foot.

## DESCRIPTION OF EMBODIMENTS

An electronic device provided in the embodiments of this application may include, but is not limited to, an electronic device in which a fan apparatus may be internally disposed, such as a notebook computer, a tablet computer (namely, a pad), an ultra-mobile personal computer (ultra-mobile personal computer, UMPC), a desktop computer, a netbook, and the like.

The electronic device in the embodiments of this application is further described below by using a notebook computer as an example.

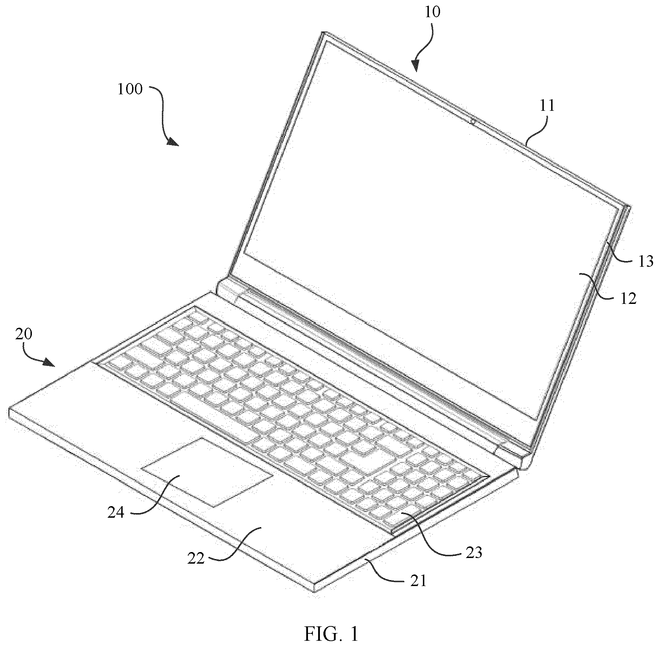

FIG. 1 is a schematic diagram of a structure of a notebook computer from different visual angles. It can be seen from FIG. 1 that, the electronic device such as a notebook computer 100 may include a screen member 10 of a display 12, a base 20, and a rotating shaft assembly. The screen member 10 is rotatably connected to the base 20 by using the rotating shaft assembly to change a form of the notebook computer 100, so that the screen member 10 is opened or closed.

For better description of a structure of the notebook computer 100, the notebook computer 100 is generally divided into faces A, B, C, and D, as shown in FIG. 1. The faces A, B, C, and D correspond to a top cover 11, the display 12, a keyboard 23, and a bottom housing 21 of the notebook computer 100, respectively. The top cover 11 of the face A, a first bezel 13 of the face B, and a second bezel 22 of the face C form a housing of the notebook computer 100 together with the bottom housing 21.

The display 12 is assembled on the face B of the notebook computer 100, and the display 12 is connected to the top cover 11 by using the first bezel 13 of the face B, to form the screen member 10 of the notebook computer 100. A form of the electronic device such as the notebook computer 100 is changed by changing a location of the screen member 10 relative to the base 20 under the action of an external force, so that the screen member 10 is in an open or closed state on the electronic device.

As shown in FIG. 1, the electronic device such as the notebook computer 100 may further include the keyboard 23, a touch panel 24, and a circuit board. The second bezel 22 of the face C is covered on the bottom housing 21 and encloses a cavity together with the bottom housing 21. The circuit board may be disposed in the cavity. As two different input modules of the notebook computer 100, the keyboard 23 and the touch panel 24 may be embedded on the second bezel 22 of the face C, and be electrically connected to the circuit board, to send commands, input data, or the like to the notebook computer 100. The keyboard 23 and the touch panel 24 are connected to the bottom housing 21 by using the second bezel 22 on the face C, to form the base 20 of the notebook computer 100.

The electronic device such as the notebook computer 100 may further include a central processing unit (Central Processing Unit, CPU). The central processing unit is located on and electrically connected to the circuit board in the base 20. As an operation core and control core of the electronic device, the central processing unit is mainly configured to perform data processing and operation in the electronic device. The central processing unit as a main electrical component in the electronic device generates a lot of heat during running. The heat may even affect use of the electronic device in a severe case.

It can be understood that, the structure illustrated in the embodiments of this application does not constitute a specific limitation on the notebook computer 100. In some other embodiments of this application, the notebook computer 100 may include more or fewer components than those shown in the figure, or combine some components, or split some components, or have different component arrangements. The illustrated components may be implemented by hardware, software, or a combination of software and hardware.

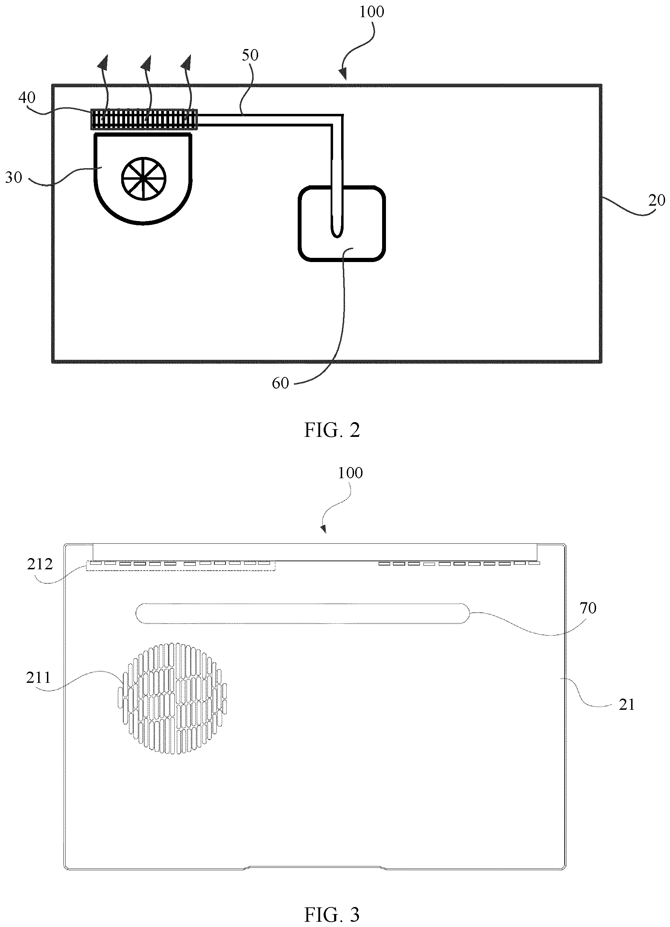

FIG. 2 is an internal schematic diagram of a notebook computer according to an embodiment of this application.

To perform heat dissipation on the central processing unit, as shown in FIG. 2, the electronic device is provided with a fan apparatus 30, a heat pipe 50, and a heat sink 40 in the housing such as the base 20. One end of the heat pipe 50 is connected to a heat dissipation plate 60 covered on the central processing unit, and the other end of the heat pipe 50 passes through and is disposed in the heat sink 40. In this way, heat of the central processing unit absorbed by the heat dissipation plate 60 can be transferred to the heat sink 40 through the heat pipe 50. For example, the heat pipe 50 includes but is not limited to a copper pipe, an aluminum pipe, or another tubular structure with good thermal conductivity. The heat sink 40 is located at an air outlet 32 of the fan apparatus 30, so that an airflow generated by the fan apparatus 30 during operation enters a gap between heat dissipation sheets of the heat sink 40, to take away heat in the heat sink 40 and the heat pipe 50 and discharge the heat to the outside of the electronic device, thereby cooling the central processing unit and improving a heat dissipation effect of the notebook computer 100. The fan apparatus 30 may be electrically connected to the central processing unit, so as to adjust a rotational speed of the fan apparatus 30 by using the central processing unit to improve heat dissipation efficiency of the notebook computer 100.

FIG. 3 is a schematic diagram of a structure of a base bottom of a notebook computer according to an embodiment of this application.

As shown in FIG. 3, a bottom of the bottom housing 21 of the electronic device such as the notebook computer 100 is further provided with an air inlet region 211 and an air outlet region 212. The air inlet region 211 may be disposed opposite to an air inlet 31 of the fan apparatus 30, and the air outlet region 212 may be disposed opposite to the air outlet 32 of the fan apparatus 30. In this way, cold air outside the electronic device can enter the air inlet 31 through the air inlet region 211, so as to take away the heat in the heat sink 40 and the heat pipe 50 and discharge the heat to the outside of the electronic device through the air outlet region 212 when the fan apparatus 30 operates.

A plurality of through holes are disposed at locations at a bottom of the base 20 that correspond to the air inlet 31 and the air outlet 32 of the fan apparatus 30. The through holes may form the air inlet region 211 and the air outlet region 212 at a bottom of the housing, respectively, so that the fan apparatus 30 can perform heat dissipation on the electronic device by using cold air outside the electronic device, thereby improving heat dissipation performance of the electronic device. For example, the through holes may be circular through holes, strip-shaped through holes, polygonal through holes, or through holes of other shapes.

As shown in FIG. 3, a bottom of the electronic device is further provided with a support foot 70. In this way, when the electronic device is placed on a workbench, at least one side of the bottom of the electronic device can be raised by the support foot 70, so that outside air can enter the fan apparatus 30 through the air inlet region 211 to improve the heat dissipation performance of the electronic device.

To quickly discharge the heat generated by the central processing unit to the outside of the electronic device, a fan with a high rotational speed (for example, a rotational speed of 6000 rpm to 8000 rpm) is used in the existing notebook computer 100. In this way, the fan with a high rotational speed can generate an airflow with a large air volume during operation, and the heat in the heat sink 40 and the heat pipe 50 can be quickly discharged to the outside of the notebook computer 100, so that the central processing unit is rapidly cooled, and the heat dissipation effect of the notebook computer 100 is improved.

However, while the fan with a high rotational speed generates the airflow with a large air volume, fan blades of the fan with a high rotational speed compress the air during rotation, and produce a higher air pressure. This causes a noise interference problem, and consequently a user has poor product experience on the notebook computer 100.

A noise-eliminating function of the fan with a high rotational speed has become one type of core competitiveness of the electronic device such as the notebook computer 100. Therefore, how to reduce noise generated by the fan with a high rotational speed has become an urgent problem to be resolved.

For this, an embodiment of this application provides a fan apparatus 30. The fan apparatus 30 may be disposed in the base 20 of the electronic device such as the notebook computer 100, to replace the fan with a high rotational speed of the existing notebook computer 100. Without affecting the heat dissipation effect of the existing electronic device, active noise reduction of the fan apparatus 30 may be used to eliminate noise at a fixed frequency or different frequencies, to alleviate a noise problem caused by a fan with a high rotational speed in a conventional technology, and ensure the heat dissipation performance of the electronic device. This not only enables a fan with a smaller size to be used in the electronic device to increase a rotational speed and implement lightening and thinning (that is, thickness reduction) and heat dissipation of the electronic device, but also improves experience comfort of the electronic device.

It should be noted that, the fan apparatus 30 in this embodiment of this application may be applied to not only heat dissipation of the central processing unit, but also heat dissipation of a graphics processing unit (Graphics card, GPU) or another electrical component with a heat dissipation requirement in the electronic device.

Therefore, one or more fan apparatuses 30 may be disposed in the housing of the electronic device such as the base 20 in this embodiment of this application. The fan apparatus 30 is used to perform heat dissipation on at least one of the central processing unit, the graphics processing unit, and the like of the electronic device, to improve the heat dissipation performance of the electronic device. When the fan apparatus 30 is used to perform heat dissipation on the graphics processing unit or another electrical component, the fan apparatus 30 may be disposed in the electronic device with reference to heat dissipation performed by the fan apparatus 30 in the electronic device on the central processing unit. No further description is provided in this embodiment.

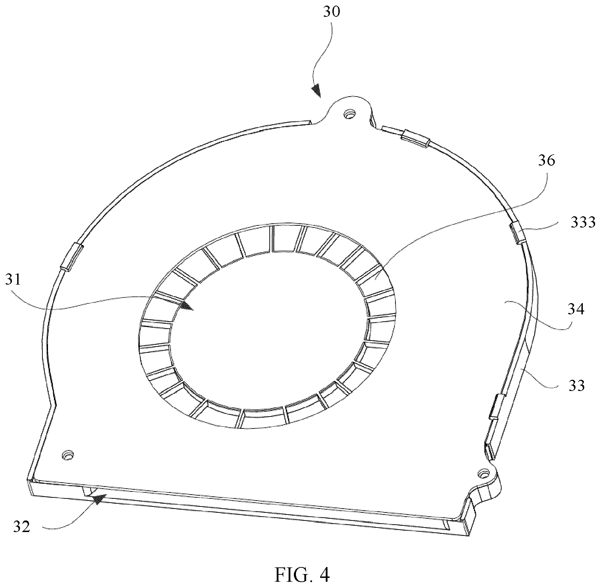

The fan apparatus in this embodiment of this application is further described with reference to FIG. 4 to FIG. 16.

FIG. 4 is a schematic diagram of a structure of a fan apparatus according to an embodiment of this application. FIG. 4 is an overall view of a fan apparatus.

It can be seen from FIG. 4 that, the fan apparatus 30 may include a first housing 33, a second housing 34, and a fan blade unit 36. The second housing 34 is covered on the first housing 33 to form at least a part of a housing of the fan apparatus 30. The first housing 33 has an accommodating cavity 371, and the fan blade unit 36 is rotatably disposed in the accommodating cavity 371. In this way, not only the fan blade unit 36 is disposed in the accommodating cavity 371, but also a function of the fan apparatus 30 can be implemented by rotation of the fan blade unit 36, so that an airflow generated by the fan blade unit 36 can flow through the heat sink 40 and the heat pipe 50 for heat dissipation of the electronic device.

As shown in FIG. 4, the fan apparatus 30 is further provided with an air inlet 31 on a same side as the fan blade unit 36, and the air inlet 31 communicates with the accommodating cavity 371, so that outside air can enter the accommodating cavity 371 through the air inlet 31.

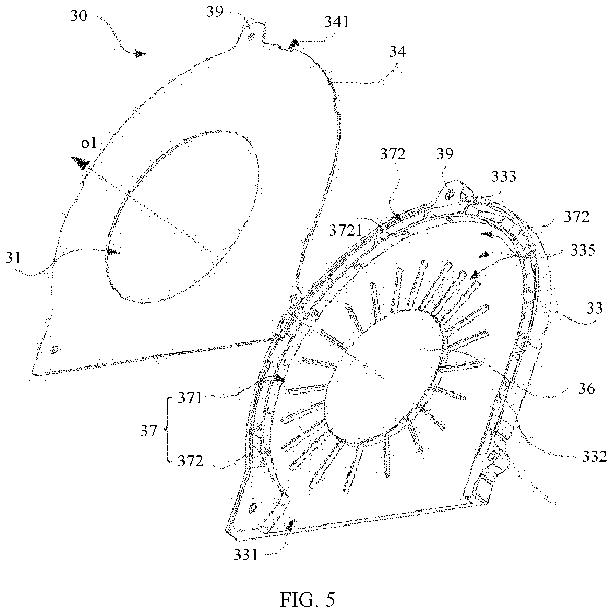

FIG. 5 is an exploded view of a fan apparatus according to an embodiment of this application.

As shown in FIG. 5 in combination with FIG. 4, to facilitate outflow of the airflow generated by the fan apparatus 30, the first housing 33 is provided with an air outlet passage 331 on one side of the fan blade unit 36. An air outlet 32 may be located on one side of the accommodating cavity 371, and the second housing 34 of the fan apparatus 30 is covered on the first housing 33 and forms, at an edge of the fan apparatus 30 together with the first housing 33, the air outlet 32 communicating with the air outlet passage 331. A space between a cavity wall of the accommodating cavity 371 and the fan blade unit 36 form an air duct 335 of the fan apparatus 30. In this way, the airflow generated by the fan blade unit 36 can flow in the air duct 335 and be discharged through the air outlet 32.

In a possible manner, an included angle exists between the air inlet 31 and the air outlet 32. For example, the air outlet 32 may be perpendicular to the air inlet 31. In other words, the fan apparatus 30 may be a centrifugal fan. In this way, an airflow outflowing from the air outlet 32 may be perpendicular to an axial direction o1 of the fan blade unit 36, to help flatten the fan apparatus 30 while ensuring a heat dissipation effect of the fan apparatus 30.

Alternatively, the air inlet 31 may be parallel to the air outlet 32. In other words, the air inlet 31 and the air outlet 32 each may be parallel to the axial direction o1 of the fan blade unit 36.

The fan apparatus 30 in this embodiment of this application is further described below by using an example in which the air outlet 32 may be perpendicular to the air inlet 31.

To resolve the noise problem caused by an existing fan with a high rotational speed, as shown in FIG. 5, the fan apparatus 30 in this embodiment of this application further includes a fence member 332, the fence member 332 is located in the first housing 33, and the fence member 332 is located on a circumferential outer side of the fan blade unit 36. Specifically, the fence member 332 may be located on a sidewall of the air duct 335 of the fan apparatus 30, so that disposing the fence member 332 does not affect an air volume of the fan apparatus 30, to ensure the heat dissipation effect of the fan apparatus 30. The second housing 34 is covered on the first housing 33 and the fence member 332, and the second housing 34 encloses at least one resonant cavity 372 together with the first housing 33 and the fence member 332. In other words, the second housing 34 may enclose one or more resonant cavities 372 together with the first housing 33 and the fence member 332. The resonant cavity 372 may also be referred to as a sound cavity, a noise reduction cavity, or the like. A cavity wall of the resonant cavity 372 has a muffling hole 3721, and the resonant cavity 372 communicates with the accommodating cavity 371 through the muffling hole 3721. In this way, when a frequency of the airflow of the fan blade unit 36 (namely, an incident frequency of the resonant cavity 372) is consistent with a natural frequency in the resonant cavity 372, and the airflow of the fan blade unit 36 flows into the muffling hole 3721, the air in the resonant cavity 372 resonates under excitation by the airflow of the fan blade unit 36, and noise generated in the air duct 335 of the fan apparatus 30 is eliminated at the muffling hole 3721, thereby significantly alleviating the noise problem caused by a fan with a high rotational speed.

Because the fence member 332 is located on the circumferential outer side of the fan blade unit 36 so that the resonant cavity 372 is also located on the circumferential outer side of the fan blade unit 36 (that is, at the sidewall of the air duct 335), the noise generated in the air duct 335 of the fan apparatus 30 is eliminated by using the resonant cavity 372, and propagation of the airflow of the fan apparatus 30 in the air duct 335 is not affected, that is, a mass transfer function of the air duct 335 of the fan apparatus 30 is not affected. In this way, air resistance of the resonant cavity 372 and that of the fan apparatus 30 can be successfully decoupled. Therefore, disposing the resonant cavity 372 does not affect the air volume of the fan apparatus 30, so that when the fan apparatus 30 operates at a high rotational speed (for example, at a rotational speed of 6000 rpm to 8000 rpm), the heat dissipation effect of the fan apparatus 30 is ensured and the electronic device can have good heat dissipation performance.

As shown in FIG. 5, the first housing 33 and the second housing 34 may be sequentially arranged along the axial direction o1 of the fan blade unit 36. For example, the second housing 34 may be covered on a side of the first housing 33 that faces the fan blade unit 36, as shown in FIG. 5, in other words, the second housing 34 may form a cover of the fan apparatus 30. Alternatively, the second housing 34 may be covered on a side of the first housing 33 that is away from the fan blade unit 36, in other words, the second housing 34 may form a bottom cover of the fan apparatus 30. In this way, the second housing 34 can be covered on the first housing 33 to form the resonant cavity 372 together with the first housing 33 and the fence member 332. The resonant cavity 372 is used to eliminate the noise in the air duct 335 of the fan apparatus 30, so that the fan apparatus 30 can have a noise reduction function and further have more diversified structures, to meet requirements of different electronic devices.

The following further describes the fan apparatus 30 in this embodiment of this application by using an example in which the second housing 34 is the cover of the fan apparatus 30.

In a possible implementation, as shown in FIG. 5, the first housing 33 is provided with a first mounting cavity 37, and the fence member 332 is located in the first mounting cavity 37. The fence member 332 and the first housing 33 together form a base of the fan apparatus 30, and the second housing 34 forms the cover of the fan apparatus 30. The fan apparatus 30 includes the cover, the base, and the fan blade unit 36. The fan blade unit 36 is rotatably disposed in the accommodating cavity 371 in the base. A space, in the first mounting cavity 37, on a side of the fence member 332 that faces the fan blade unit 36 forms the accommodating cavity 371; and a space, in the first mounting cavity 37, on a side of the fence member 332 that faces away from the fan blade unit 36 forms the resonant cavity 372 together with the second housing 34. The resonant cavity 372 is located on a circumferential side of the accommodating cavity 371. In this way, without affecting a rotational speed and the air volume of the fan apparatus 30, the noise problem caused by the fan apparatus 30 such as a fan with a high rotational speed can be significantly alleviated by using the resonant cavity 372, and further a total thickness of the fan apparatus 30 is not increased, which helps flatten the fan apparatus 30 and the electronic device.

It should be noted that, the housing of the fan apparatus 30, such as the first housing 33 and the second housing 34, may be prepared by using steel sheets or other materials through stamping. The fence member 332 may be prepared by using a steel sheet of the first housing 33 through an insert and injection molding process, so that the fence member 332 is integrally connected to the first housing 33, to eliminate a gap between the fence member 332 and the first housing 33 as much as possible, and ensure sealing performance of the resonant cavity 372.

As shown in FIG. 5, a sidewall of the first housing 33 is provided with a limiting block 333 that extends towards a side of the second housing 34, and a notch 341 that adapts to the limiting block 333 is provided on the second housing 34 at a location opposite to the limiting block 333. In this way, when the second housing 34 is covered on the first housing 33, the first housing 33 can be clamped to the second housing 34 by using the limiting block 333, so that the second housing 34 and the first housing 33 can be fastened in advance, and the second housing 34 is further connected to the first housing 33.

It should be noted that, the limiting block 333 and the notch 341 are not limited to the foregoing arrangement manner. In other words, alternatively, the limiting block 333 may be provided on the second housing 34, and the notch 341 may be provided on the first housing 33, so that the fan apparatus 30 can have more diversified structures.

To improve stability of the connection between the second housing 34 and the first housing 33, on basis of the clamping, the second housing 34 may be connected to the first housing 33 by using a plurality of fasteners when covered on the first housing 33, so that the second housing 34 is stably connected to the first housing 33 to ensure the sealing performance of the resonant cavity 372. For example, the fasteners include but are not limited to screws or bolts.

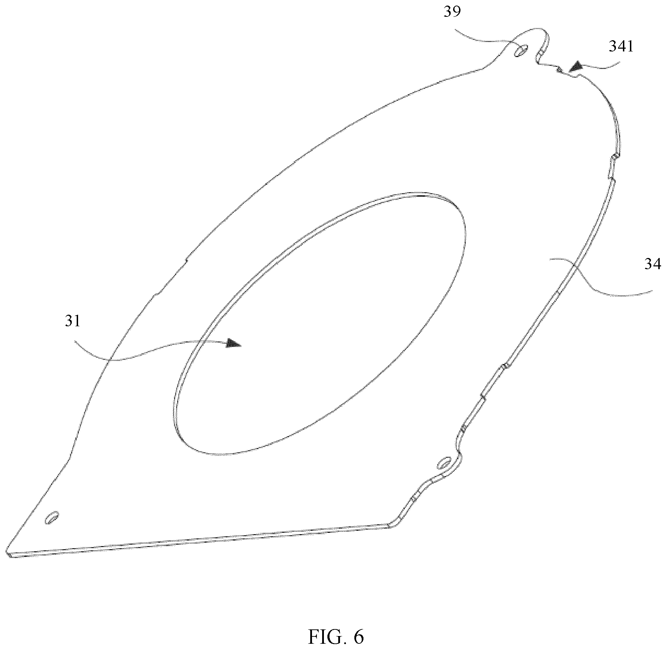

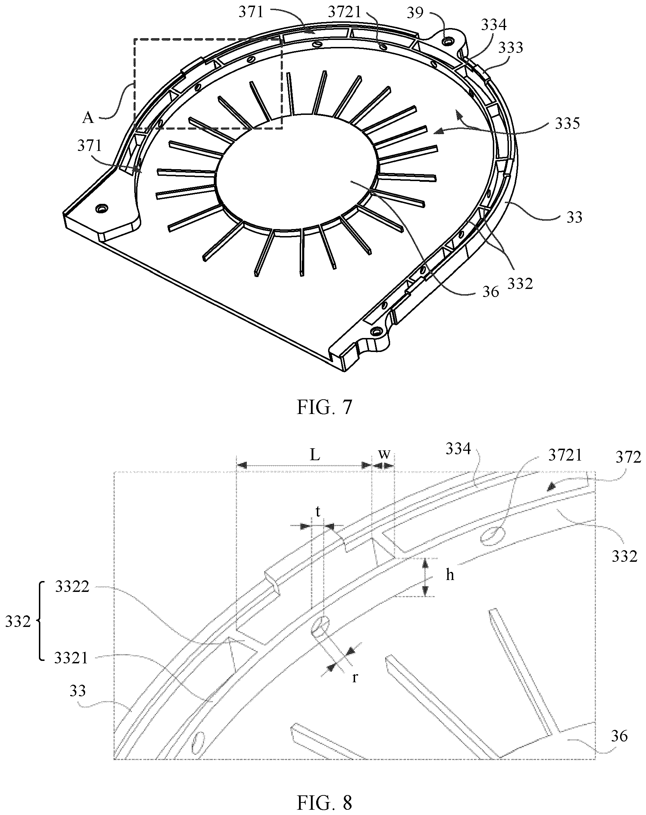

FIG. 6 is a schematic diagram of a structure of a cover of a fan apparatus according to an embodiment of this application. FIG. 7 is an internal schematic diagram of a fan apparatus according to an embodiment of this application. FIG. 6 and FIG. 7 show structures of the cover and the base of the fan apparatus, respectively.

It can be seen from FIG. 6 and FIG. 7 that, to facilitate connection of the fasteners, the first housing 33 and the second housing 34 each are provided with assembly holes 39 for the fasteners to pass through. The air inlet 31 may be located on the second housing 34 (that is, the top cover 11), and a structure of the air inlet 31 matches a structure of the fan blade unit 36.

To improve sealing performance of the connection between the first housing 33 and the second housing 34, as shown in FIG. 7, the sidewall of the first housing 33 is further provided with a sealing surface 334, the second housing 34 is covered on the sealing surface 334, and the fence member 332 may be connected to a side of the second housing 34 that faces the first housing 33 in a sealing manner. For example, the sealing surface 334 may be a stepped surface on a side that is of the sidewall of the first housing 33 and that faces the fan blade unit 36. This not only can improve the sealing performance of the resonant cavity 372, but also can further limit the assembly of the second housing 34 on the first housing 33, to facilitate the connection of the fasteners.

As shown in FIG. 7, the resonant cavity 372 and the fan blade unit 36 are located on a same side of the first housing 33. This enables the fan apparatus 30 to have the noise reduction function, and helps flatten the fan apparatus 30, without affecting the air volume of the fan apparatus 30.

To facilitate communication between the resonant cavity 372 and the accommodating cavity 371, the muffling hole 3721 may be disposed on a cavity wall of the resonant cavity 372 that faces the fan blade unit 36, as shown in FIG. 7. In this way, the resonant cavity 372 can communicate with the accommodating cavity 371 through the muffling hole 3721, so that the air in the resonant cavity 372 can resonate under excitation by the airflow generated by the fan blade unit 36, and the noise generated in the air duct 335 of the fan apparatus 30 can be eliminated at the muffling hole 3721. In this way, without affecting the air volume of the fan apparatus 30, the noise interference problem caused by an existing fan with a high rotational speed can be significantly alleviated, so that the fan apparatus 30 has the noise reduction function to implement thickness reduction and heat dissipation of the electronic device such as the notebook computer 100, and improve user experience of the electronic device.

As shown in FIG. 7, the muffling hole 3721 may be located at a central location of the resonant cavity 372. Alternatively, the muffling hole 3721 may be disposed deviating from the central location of the resonant cavity 372. In other words, the muffling hole 3721 may be located at an eccentric location of the resonant cavity 372. In this way, by controlling a location of the muffling hole 3721 on the resonant cavity 372, a resonant frequency of the resonant cavity 372 can be adjusted without changing a volume of the resonant cavity 372.

As shown in FIG. 7, the resonant cavity 372 may be a Helmholtz resonant cavity. The Helmholtz resonant cavity has a capability of eliminating noise with a frequency same as the resonant frequency of the Helmholtz resonant cavity, and the Helmholtz resonant cavity is a semi-closed structure design.

Therefore, in this embodiment of this application, by using characteristics of the Helmholtz resonant cavity, the resonant cavity 372 may be disposed at the sidewall of the air duct 335 of the fan apparatus 30, so that the noise generated by the fan apparatus 30 that has a frequency same as the resonant frequency of the resonant cavity 372 can be eliminated without affecting the mass transfer function in the air duct 335, thereby alleviating the noise problem caused by the fan apparatus 30 such as a fan with a high rotational speed.

FIG. 8 is an enlarged schematic diagram of a portion A of the fan apparatus in FIG. 7.

The resonant frequency of the Helmholtz resonant cavity depends on a cross-sectional area and a hole depth of the muffling hole 3721 and a volume of the Helmholtz resonant cavity. In other words, the resonant frequency of the resonant cavity 372 depends on the cross-sectional area and the hole depth of the muffling hole 3721 and the volume of the resonant cavity 372.

As shown in FIG. 8, the resonant frequency of the resonant cavity 372 may be briefly described by using the following formula 1:

$$f = \frac{c}{2\pi}\sqrt{\frac{S}{tV}}$$

In the formula, f is the resonant frequency of the resonant cavity 372, c is a sound propagation speed (340 m/s), S is the cross-sectional area of the muffling hole 3721, t is the hole depth of the muffling hole 3721, and V is the volume of the resonant cavity 372.

It should be noted that, the foregoing formula 1 is applicable to calculation of the resonant frequency f of the resonant cavity 372 in a case that the muffling hole 3721 is located at the central location of the resonant cavity 372. In this embodiment of this application, when the muffling hole 3721 is a circular hole, the cross-sectional area S of the muffling hole 3721 may be represented by using $S=\pi r^2$, where r is a radius of the muffling hole 3721. When the fan apparatus 30 includes a plurality of resonant cavities 372, a single resonant cavity 372 may be simplified into a cuboid, and therefore the volume V of the resonant cavity 372 may be represented by using V=Lwh. L is a length of the resonant cavity 372, w is a width of the resonant cavity 372, and h is a height of the resonant cavity 372.

Therefore, in this embodiment of this application, a size of the volume V of the resonant cavity 372 and the cross-sectional area S of the muffling hole 3721 may be adjusted by adjusting the length L of the resonant cavity 372, the width w of the resonant cavity 372, the height h of the resonant cavity 372, and the radius r of the muffling hole 3721, and the hole depth t of the muffling hole 3721 may be adjusted by adjusting a thickness of the fence member 332 or an arrangement manner of the muffling hole 3721, to adjust the resonant frequency f of the resonant cavity 372, so that a plurality of resonant cavities 372 are integrated on the circumferential outer side of the fan blade unit 36. In this way, without affecting the air volume of the fan apparatus 30, one fan apparatus 30 can eliminate multi-spectral noise to meet noise reduction requirements of the fan apparatus 30 and the electronic device at different rotational speeds of a fan.

In a possible implementation, the plurality of resonant cavities 372 may have a same volume. The muffling holes 3721 of the resonant cavities 372 may have same or different dimensions. The dimensions of the muffling hole 3721 include but are not limited to the cross-sectional area and the hole depth of the muffling hole 3721. When the resonant cavities 372 have muffling holes 3721 of same dimensions, the resonant frequencies of the resonant cavities 372 can be a fixed frequency without affecting the air volume of the fan apparatus 30, thereby helping increase a noise reduction level for the noise in the duct 335 of the fan apparatus 30 that has a same frequency as the resonant frequency. When the resonant cavities 372 have muffling holes 3721 of different dimensions, the resonant frequencies of the resonant cavities 372 can be adjusted by adjusting the dimensions of the muffling holes 3721 without affecting the air volume of the fan apparatus 30, so that one fan apparatus 30 can eliminate multi-spectral noise.

In another possible implementation, the plurality of resonant cavities 372 have different volumes to correspond to resonant frequencies of the resonant cavities 372 at different rotational speeds of the fan blade unit 36. In other words, the fan apparatus 30 has a plurality of resonant cavities 372 with different volumes, and the volume of each resonant cavity 372 can match the resonant frequency of the resonant cavity 372 at different rotational speeds of the fan blade unit 36. In this case, the muffling holes 3721 of the resonant cavities 372 may have same or different dimensions. When the muffling hole 3721 is located at the central location of the resonant cavity 372, the resonant frequency of the resonant cavity 372 may be adjusted according to the formula 1 based on the dimensions of the muffling hole 3721 and the volume of the resonant cavity 372. In this way, the noise at different frequencies that is generated by the fan blade unit 36 at different rotational speeds can be eliminated by using the plurality of resonant cavities 372 without affecting the air volume of the fan apparatus 30, so that one fan apparatus 30 can eliminate multi-spectral noise.

This embodiment of this application provides examples of a plurality of different dimensions and resonant frequencies of resonant cavities 372, as listed in the following Tables 1 and 2. The dimensions of the resonant cavities 372 include but are not limited to the volumes of the resonant cavities 372 and the dimensions of the muffling holes 3721.

**Table 1 Dimensions and resonant frequencies of the resonant cavities according to this embodiment of this application**

| Serial number | Dimension type | Unit | Example 1-1 | Example 1-2 |
|---|---|---|---|---|
| 1 | Radius r of the muffling hole | mm | 0.05 | 0.05 |
| 2 | Depth t of the muffling hole | mm | 0.3 | 0.3 |
| 3 | Height h of the resonant cavity | mm | 3.5 | 3.5 |
| 4 | Width w of the resonant cavity | mm | 1 | 1 |
| 5 | Length L of the resonant cavity | mm | 10 | 110 |
| 6 | Resonant frequency f of the resonant cavity | Hz | 835.4 | 251.9 |

**Table 2 Dimensions and resonant frequencies of the resonant cavities according to this embodiment of this application**

| Serial number | Dimension type | Unit | Example 2-1 | Example 2-2 |
|---|---|---|---|---|
| 1 | Radius r of the muffling hole | mm | 0.05 | 0.05 |
| 2 | Depth t of the muffling hole | mm | 0.3 | 0.3 |
| 3 | Height h of the resonant cavity | mm | 1 | 1 |
| 4 | Width w of the resonant cavity | mm | 5 | 5 |
| 5 | Length L of the resonant cavity | mm | 10 | 110 |
| 6 | Resonant frequency f of the resonant cavity | Hz | 698.9 | 210.7 |

The examples 1-1 and 1-2 in Table 1 show the resonant frequencies f of a single resonant cavity 372 in two types of fan apparatuses 30 under a condition that there are a plurality of same dimensions for the muffling holes 3721. In this case, as the length L of the resonant cavity 372 of the fan apparatus 30 in the example 1-1 is less than the length L of the resonant cavity 372 in the example 1-1, the resonant frequency f of a single resonant cavity 372 in the fan apparatus 30 in the example 1-1 is higher. It can be learned that, when the fan apparatus 30 has a plurality of resonant cavities 372, the volume V of the resonant cavity 372 can be controlled by controlling a change in the length L of the resonant cavity 372, thereby adjusting the resonant frequency f of the resonant cavity 372. According to the examples 2-1 and 2-2 in Table 2, under a condition that the fan apparatus 30 has one resonant cavity 372 and the muffling holes 3721 have same dimensions, the resonant cavity 372 in the example 2-2 has a larger volume V than that of the resonant cavity 372 in the example 2-1, the resonant cavity 372 in the example 2-2 has a lower resonant frequency f.

Therefore, in this embodiment of this application, with a plurality of resonant cavities 372 disposed in the fan apparatus 30, the resonant frequency of each sound cavity can be separately controlled by adjusting the dimensions of the resonant cavity 372, so that one fan can eliminate multi-spectral noise.

It should be noted that, the dimensions of the resonant cavity 372 in this embodiment of this application include but are not limited to the dimensions listed in Table 1 and Table 2. In actual application, the dimensions of the resonant cavity 372 may be accordingly adjusted based on the dimensions, rotational speed, and frequency of to-be-eliminated noise of the fan apparatus 30. As shown in FIG. 8 in combination with FIG. 7, the plurality of resonant cavities 372 may be continuously arranged on the circumferential outer side of the fan blade unit 36. In other words, the plurality of continuous resonant cavities 372 are disposed in the fan apparatus 30 on the circumferential outer side of the fan blade unit 36 (that is, at the sidewall of the air duct 335). In this way, without affecting the air volume of the fan apparatus 30, the noise in the air duct 335 that has same frequencies as the resonant frequencies of the resonant cavities 372 can be reduced by using the plurality of resonant cavities 372 from different directions of the air duct 335 when the plurality of resonant cavities 372 have the same dimensions, to help increase a noise reduction level for the noise in the air duct 335 of the fan apparatus 30; and further, the dimensions of the plurality of resonant cavities 372 may be adjusted to help eliminate the noise at different frequencies in the air duct 335 of the fan apparatus 30 by using the plurality of resonant cavities 372, so that one fan apparatus 30 can eliminate multi-spectral noise to meet noise reduction requirements of the fan apparatus 30 and the electronic device at different rotational speeds of a fan.

As shown in FIG. 8 in combination with FIG. 7, the fence member 332 may be located on a side of the fan blade unit 36 that is away from the air outlet 32. In other words, the fence member 332 and the air outlet 32 may be located on two opposite sides of the fan blade unit 36. In this way, the fence member 332 forms the resonant cavities 372 together with the first housing 33 and the second housing 34, the airflow in the fan apparatus 30 can outflow from the air outlet 32 through the air duct 335 to avoid the arrangement of the fence member 332 affecting the outflow of the airflow in the fan apparatus 30.

A portion of the fence member 332 that faces the fan blade unit 36 is a retaining wall having an opening at one end, and a shape of the retaining wall adapts to a sidewall structure of the first housing 33. In this way, disposing the retaining wall can adapt to the structure of the first housing 33, so that the plurality of continuously arranged resonant cavities 372 are formed in the fan apparatus 30, and the dimensions of the resonant cavities 372 such as the volumes V of the resonant cavities 372 can be adjusted, and further the airflow in the fan apparatus 30 can outflow from the opening of the retaining wall, so that the air resistance of the resonant cavities 372 and that of the fan apparatus 30 can be successfully decoupled when the resonant cavities 372 are formed, thereby improving heat dissipation efficiency of the fan apparatus 30.

As shown in FIG. 8, the fence member 332 may include a fence portion 3321, and a spacing exists between the fence portion 3321 and an inner sidewall of the first housing 33. The spacing between the fence member 3321 and the inner sidewall of the first housing 33 may be understood as the width w of the resonant cavity 372. The fence portion 3321 is a retaining wall that has an opening at one end and that adapts to the sidewall structure of the first housing 33. For example, the fence member 3321 may be an arc structure that adapts to the sidewall of the first housing 33. In this way, with the fence portion 3321 disposed, a space in the first housing 33 can be partitioned, so that one resonant cavity 372 is formed in the fan apparatus 30 or a plurality of continuously arranged resonant cavities 372 are formed in the fan apparatus 30, and further normal outflow of the airflow in the fan apparatus 30 is not affected.

The muffling hole 3721 may be a through hole on the fence portion 3321 of the fence member 332. For example, the muffling hole 3721 includes but is not limited to a circular hole, a square hole, or a through hole of another shape. In this way, the resonant cavity 372 can communicate with the accommodating cavity 371 through the muffling hole 3721, so that the air in the resonant cavity 372 can resonate under excitation by the airflow generated by the fan blade unit 36, and the noise generated in the air duct 335 of the fan apparatus 30 can be eliminated at the muffling hole 3721, and further the resonant frequency of the resonant cavity 372 can be adjusted by controlling the dimensions of the muffling hole 3721.

It should be noted that, the muffling hole 3721 may be prepared by using computerized numerical control (CNC) machining or a laser engraving process. With the laser engraving process, a hole diameter may reach a micrometer level, and both the computerized numerical control machining and the laser engraving process can meet a design requirement of the muffling hole 3721 in this embodiment of this application.

As shown in FIG. 8, the fence member 332 may further include a plurality of partition portions 3322, the plurality of partition portions 3322 are connected between the fence portion 3321 and the inner sidewall of the first housing 33 to partition a space jointly enclosed by the fence portion 3321, the first housing 33, and the second housing 34 into a plurality of continuous resonant cavities 372. The partition portions 3322 and the fence member 3321 may form the fence member 332. In this way, the fence member 332 can form a plurality of continuous resonant cavities 372 on the circumferential outer side of the fan blade unit 36 together with the first housing 33 and the second housing 34, to help eliminate the noise at different frequencies in the air duct 335 of the fan apparatus 30 without affecting the air volume of the fan apparatus 30, so that one fan apparatus 30 can eliminate the noise at different frequencies. This enables the fan apparatus 30 to have the noise reduction function at different rotational speeds, and further improves user experience of the fan apparatus 30 and the electronic device.

As shown in FIG. 8, the plurality of partition portions 3322 are spaced between the fence portion 3321 and the inner sidewall of the first housing 33. In this way, the plurality of continuously arranged resonant cavities 372 can be formed on the circumferential outer side of the fan blade unit 36, and further the resonant frequencies of the resonant cavities 372 can be adjusted by adjusting a spacing between two adjacent partition portions 3322, so that one fan apparatus 30 can eliminate multi-spectral noise.

In this embodiment, two adjacent partition portions 3322 may have a same or different spacings.

In this way, a plurality of resonant cavities 372 with a same or different volumes can be formed on the circumferential outer side of the fan blade unit 36, so that the noise reduction level of the fan apparatus 30 is increased by using the plurality of resonant cavities 372 or the noise at different frequencies in the air duct 335 of the fan apparatus 30 is eliminated.

The partition portions 3322 are connected to the inner sidewall of the first housing 33 and the side of the second housing 34 that faces the first housing 33 in a sealing manner, to form the resonant cavities 372. In this way, a plurality of mutually independent resonant cavities 372 can be formed through partitioning in the first housing 33 by using the partition portions 3322, to avoid mutual interference between adjacent resonant cavities 372 and improve a noise reduction effect of the fan apparatus 30.

The plurality of partition portions 3322 may have a same height, so that the partition portions are connected to the inner sidewall of the first housing 33 and the side of the second housing 34 that faces the first housing 33 in the sealing manner. The height of the partition portions 3322 may also be understood as the height h of the resonant cavity 372.

To further improve the noise reduction effect of the fan apparatus 30, the fan apparatus 30 may further include a sound insulation film disposed on the cavity wall of the resonant cavity 372, and the sound insulation film may be covered on an end of the muffling hole 3721 that faces the fan blade unit 36. In this way, on the basis of the resonant cavity 372, the fan apparatus 30 can have a better noise reduction effect with reference to a noise reduction manner of the sound insulation film.

Alternatively, in another possible implementation, the resonant cavity 372 may be further provided with a sound absorbing member, and the sound absorbing member may be filled in the resonant cavity 372 or the sound absorbing member is disposed on a cavity wall of the resonant cavity 372. For example, the sound absorbing member includes but is not limited to sound absorbing cotton. In this way, on the basis of the resonant cavity 372, the fan apparatus 30 can have a better noise reduction effect with reference to a noise reduction manner of the sound absorbing member. Alternatively, on the basis of the resonant cavity 372, a manner of combining the sound insulation film and the sound absorbing member may further be used in this embodiment of this application to further improve the noise reduction effect of the fan apparatus 30.

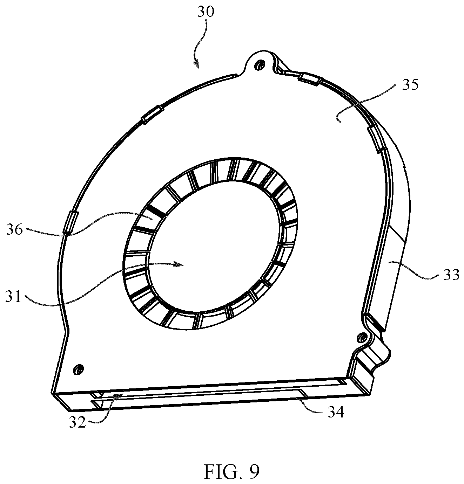

FIG. 9 to FIG. 11 are respectively a schematic diagram of a structure of another fan apparatus and exploded views of the another fan apparatus from different visual angles according to embodiments of this application.

On the basis of the foregoing description, an embodiment of this application further provides a fan apparatus 30 with another structure. As shown in FIG. 9 to FIG. 11, a difference from the foregoing fan apparatus 30 lies in that, the second housing 34 may form a bottom cover of the fan apparatus 30, and the fan apparatus 30 may further include a third housing 35, where the third housing 35 is sequentially arranged along the axial direction o1 of the fan blade unit 36, the third housing 35 is located on a side of the first housing 33 that is opposite to the second housing 34, and the third housing 35 forms a cover of the fan apparatus 30. The fan apparatus 30 in this embodiment may include the cover, the base, the fan blade unit 36, and the bottom cover.

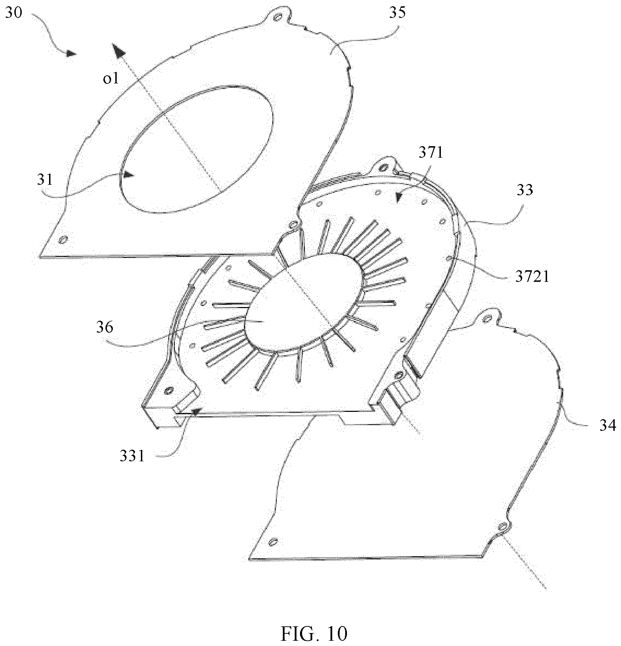

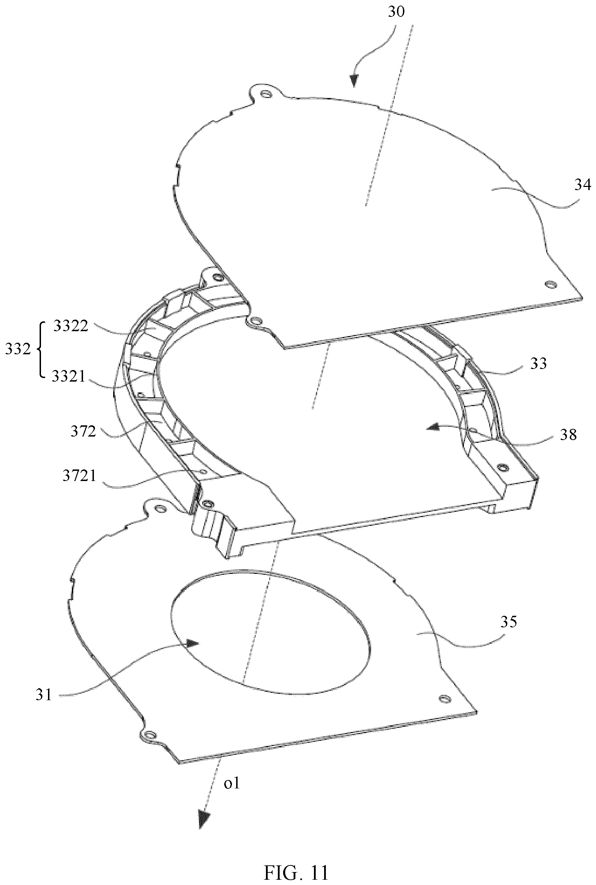

As shown in FIG. 10 and FIG. 11, the resonant cavity 372 and the fan blade unit 36 may be located on two opposite sides of the first housing 33. In other words, the fan blade unit 36 is located on a side of the first housing 33 that faces the third housing 35, and the resonant cavity 372 is located on a side of the first housing 33 that faces the second housing 34, that is, the fan blade unit 36 is located on a front side of the first housing 33, and the resonant cavity 372 is located on a rear side of the first housing 33. This enables the fan apparatus 30 to have a noise reduction function, and enables the fan apparatus 30 to have more diversified structures.

It should be noted that, for a manner of connecting the first housing 33 to the second housing 34 and the third housing 35, refer to the foregoing manner of connecting the first housing 33 to the second housing 34. Details are not further described herein.

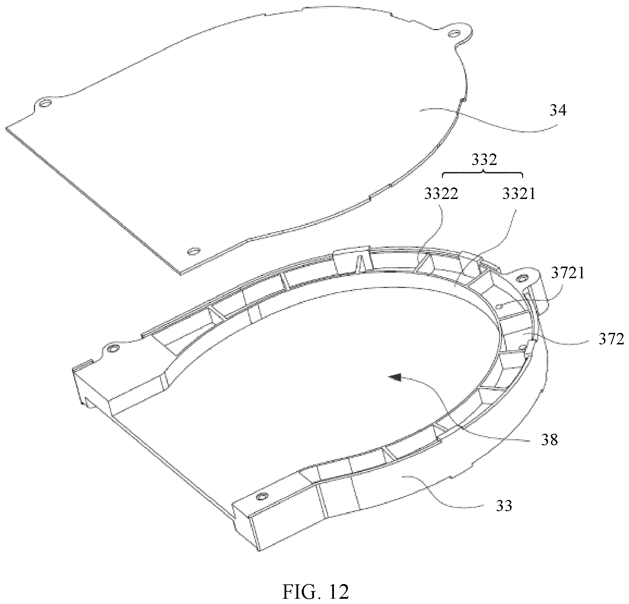

FIG. 12 is a schematic diagram of the fan apparatus in FIG. 9 that is partially split.

As shown in FIG. 12, the first housing 33 is provided with a second mounting cavity 38, the fence member 332 is located in the second mounting cavity 38, and the second mounting cavity 38 and the accommodating cavity 371 are located on two opposite sides of the first housing 33. In this way, the fence member 332 can be used to partition a space in the second mounting cavity 38, and the first housing 33 and the second housing 34 jointly enclose the resonant cavity 372 in the second mounting cavity 38, so that the resonant cavity 372 is located on the rear side of the first housing 33. In this way, while the noise problem caused by the fan apparatus 30 such as a fan with a high rotational speed is alleviated so that the fan apparatus 30 has the noise reduction function, the resonant frequency of the resonant cavity 372 can be adjusted so that one fan apparatus can eliminate multi-spectral noise, and further the fan apparatus 30 can be more diversified to meet requirements of electronic devices with different structures.

It should be noted that, for manners of forming a structure of the fence member 332 and the resonant cavity 372, refer to the foregoing related description. Details are not further described herein.

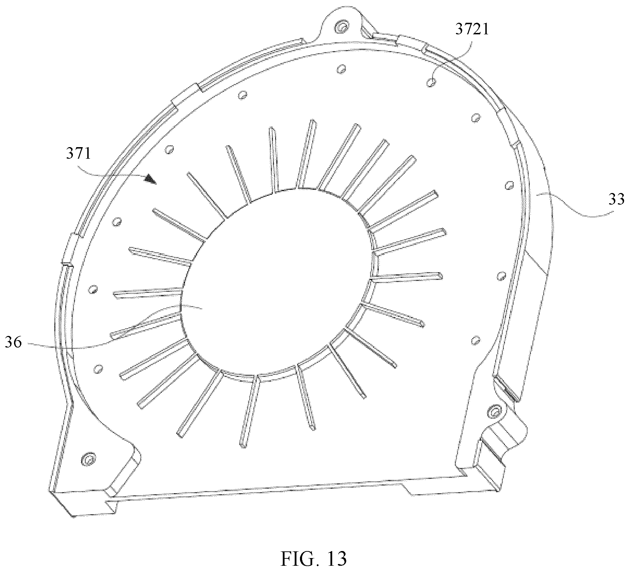

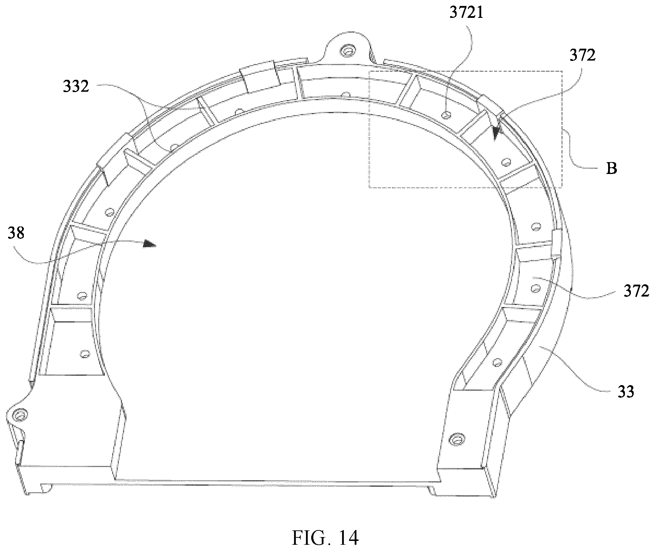

FIG. 13 is an internal schematic diagram of the fan apparatus 30 in FIG. 9 from a first visual angle. FIG. 14 is an internal schematic diagram of the fan apparatus 30 in FIG. 9 from a second visual angle.

As shown in FIG. 13 and FIG. 14, the muffling hole 3721 may be a through hole on a cavity wall on a side of the resonant cavity 372 that faces the fan blade unit 36, and the resonant cavity 372 communicates with the accommodating cavity 371 through the muffling hole 3721. For example, the muffling hole 3721 may be located in a region other than a vertical projection region (that is, an orthographic projection) of the fan blade unit 36 on the first housing 33. In this way, the air in the resonant cavity 372 resonates under excitation by the airflow generated by the fan blade unit 36, without affecting the rotational speed and the air volume of the fan apparatus 30, and further the noise generated in the air duct 335 of the fan apparatus 30 is eliminated, so that the fan apparatus 30 has the noise reduction function.

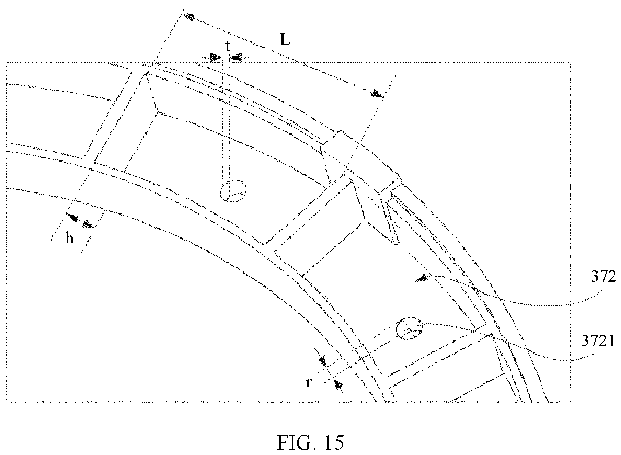

FIG. 15 is an enlarged schematic diagram of a portion B of the fan apparatus 30 in FIG. 14. For reference numerals of the dimensions of the resonant cavity 372, refer to FIG. 15. It should be noted that, for the dimensions of the resonant cavity 372, refer to the foregoing related description. The dimensions of the resonant cavity 372 of the fan apparatus 30 may also be applied to the foregoing Tables 1 and 2, and details are not further described herein.

In this application, the fence member 332 is disposed in the first housing 33 of the fan apparatus 30, the fence member 332 is disposed on the circumferential outer side of the fan blade unit 36, and the fence member 332 encloses at least one resonant cavity 372 together with the first housing 33 and the second housing 34. The resonant cavity 372 communicates with the accommodating cavity 371 of the fan apparatus 30 through the muffling hole 3721 on the cavity wall, so that the air in the resonant cavity 372 can resonate under excitation by the airflow generated by the fan blade unit 36, and the noise generated in the air duct 335 of the fan apparatus 30 can be eliminated at the muffling hole 3721. This can significantly alleviate the noise problem caused by the fan apparatus 30 such as a fan with a high rotational speed while ensuring a heat dissipation effect of the fan apparatus 30.

In the description of the embodiments of this application, it should be noted that, the terms "mounting", "connection", and "connect" should be understood in a broad sense unless otherwise expressly stipulated and limited. For example, "connection" may be a fixed connection, an indirect connection through an intermediate medium, internal communication between two elements, or an interaction relationship between two elements. For a person of ordinary skill in the art, specific meanings of the foregoing terms in the embodiments of this application can be understood based on specific situations.

The terms "first", "second", "third", "fourth", and the like (if any) in this specification, the claims, and the accompanying drawings of the embodiments of this application are used to distinguish between similar objects without having to describe a specific order or sequence.

**Claims**

1. A fan apparatus, comprising a first housing, a second housing, a fan blade unit, and a fence member located in the first housing, wherein the first housing has an accommodating cavity, the fan blade unit is rotatably disposed in the accommodating cavity, and the fence member is located on a circumferential outer side of the fan blade unit; and the second housing is covered on the first housing and the fence member, the second housing encloses at least one resonant cavity together with the first housing and the fence member, a cavity wall of the resonant cavity has a muffling hole, the resonant cavity communicates with the accommodating cavity through the muffling hole, and air in the resonant cavity resonates under excitation by an airflow of the fan blade unit.

2. The fan apparatus according to claim 1, wherein the resonant cavity is a Helmholtz resonant cavity.

3. The fan apparatus according to claim 1, wherein a plurality of resonant cavities are continuously arranged on the circumferential outer side of the fan blade unit.

4. The fan apparatus according to claim 1, wherein a portion of the fence member that faces the fan blade unit is a retaining wall having an opening at one end, and a shape of the retaining wall adapts to a sidewall structure of the first housing.

5. The fan apparatus according to claim 4, wherein the fence member comprises a fence portion and a plurality of partition portions, a spacing exists between the fence portion and an inner sidewall of the first housing, and the plurality of partition portions are connected between the fence portion and the inner sidewall of the first housing to partition a space jointly enclosed by the fence portion, the first housing, and the second housing into a plurality of continuous resonant cavities.

6. The fan apparatus according to claim 5, wherein the plurality of resonant cavities have a same volume.

7. The fan apparatus according to claim 5, wherein the plurality of resonant cavities have different volumes to correspond to resonant frequencies of the resonant cavities at different rotational speeds of the fan blade unit.

8. The fan apparatus according to claim 5, wherein the fence portion is a retaining wall that has an opening at one end and that adapts to the sidewall structure of the first housing.

9. The fan apparatus according to claim 8, wherein the plurality of partition portions are spaced between the fence portion and the inner sidewall of the first housing.

10. The fan apparatus according to claim 9, wherein two adjacent partition portions have a same or different spacings.

11. The fan apparatus according to claim 5, wherein the partition portions are connected to the inner sidewall of the first housing and a side of the second housing that faces the first housing in a sealing manner.

12. The fan apparatus according to claim 1, wherein the muffling hole is disposed on a cavity wall of the resonant cavity that faces the fan blade unit.

13. The fan apparatus according to claim 12, wherein the muffling hole is located at a central location of the resonant cavity, or the muffling hole is disposed deviating from the central location of the resonant cavity.

14. The fan apparatus according to claim 1, wherein the first housing and the second housing are sequentially arranged along an axial direction of the fan blade unit.

15. The fan apparatus according to any one of claims 1 to 14, wherein the resonant cavity and the fan blade unit are located on a same side of the first housing.

16. The fan apparatus according to claim 15, wherein the first housing is provided with a first mounting cavity; the fence member is located in the first mounting cavity; a space, in the first mounting cavity, on a side of the fence member that faces the fan blade unit forms the accommodating cavity; and a space, in the first mounting cavity, on a side of the fence member that faces away from the fan blade unit forms the resonant cavity together with the second housing.

17. The fan apparatus according to claim 16, wherein the muffling hole is a through hole on the fence portion of the fence member.

18. The fan apparatus according to any one of claims 1 to 14, wherein the resonant cavity and the fan blade unit are located on two opposite sides of the first housing.

19. The fan apparatus according to claim 18, wherein the first housing is provided with a second mounting cavity, the fence member is located in the second mounting cavity, and the second mounting cavity and the accommodating cavity are located on two opposite sides of the first housing.

20. The fan apparatus according to claim 19, wherein the muffling hole is a through hole on a cavity wall on a side of the resonant cavity that faces the fan blade unit, and the second mounting cavity communicates with the accommodating cavity through the muffling hole.

21. The fan apparatus according to any one of claims 1 to 14, wherein the first housing is provided with an air outlet on a side of the fan blade unit, and the fence member is located on a side of the fan blade unit that is away from the air outlet.

22. The fan apparatus according to claim 21, wherein the fan apparatus is further provided with an air inlet on a same side as the fan blade unit, the air inlet communicates with the accommodating cavity, and an included angle exists between the air inlet and the air outlet.

23. The fan apparatus according to any one of claims 1 to 14, further comprising a sound insulation film disposed on a cavity wall of the resonant cavity, and the sound insulation film is covered on an end of the muffling hole that faces the fan blade unit.

24. The fan apparatus according to any one of claims 1 to 14, wherein the resonant cavity is further provided with a sound absorbing member, and the sound absorbing member is filled in the resonant cavity or the sound absorbing member is disposed on a cavity wall of the resonant cavity.

25. An electronic device, comprising a housing and the fan apparatus according to any one of claims 1 to 24,wherein the fan apparatus is disposed in the housing.

26. A fan apparatus, comprising a first housing, a second housing, a fan blade unit, and a fence member located in the first housing, wherein the first housing has an accommodating cavity, the fan blade unit is rotatably disposed in the accommodating cavity, and the fence member is located on a circumferential outer side of the fan blade unit; and the second housing is covered on the first housing and the fence member, the second housing encloses at least one resonant cavity together with the first housing and the fence member, a cavity wall of the resonant cavity has a muffling hole, the resonant cavity communicates with the accommodating cavity through the muffling hole, and air in the resonant cavity resonates under excitation by an airflow of the fan blade unit; and the muffling hole is located at different locations on the resonant cavity to correspond to different resonant frequencies of the resonant cavity.

27. The fan apparatus according to claim 26, wherein the resonant cavity is a Helmholtz resonant cavity.

28. The fan apparatus according to claim 26, wherein a plurality of resonant cavities are continuously arranged on the circumferential outer side of the fan blade unit.

29. The fan apparatus according to claim 26, wherein a portion of the fence member that faces the fan blade unit is a retaining wall having an opening at one end, and a shape of the retaining wall adapts to a sidewall structure of the first housing.

30. The fan apparatus according to claim 29, wherein the fence member comprises a fence portion and a plurality of partition portions, a spacing exists between the fence portion and an inner sidewall of the first housing, and the plurality of partition portions are connected between the fence portion and the inner sidewall of the first housing to partition a space jointly enclosed by the fence portion, the first housing, and the second housing into a plurality of continuous resonant cavities.

31. The fan apparatus according to claim 30, wherein the plurality of resonant cavities have a same volume.

32. The fan apparatus according to claim 30, wherein the plurality of resonant cavities have different volumes to correspond to resonant frequencies of the resonant cavities at different rotational speeds of the fan blade unit.

33. The fan apparatus according to claim 30, wherein the fence portion is a retaining wall that has an opening at one end and that adapts to the sidewall structure of the first housing.

34. The fan apparatus according to claim 33, wherein the plurality of partition portions are spaced between the fence portion and the inner sidewall of the first housing.

35. The fan apparatus according to claim 34, wherein two adjacent partition portions have a same or different spacings.

36. The fan apparatus according to claim 30, wherein the partition portions are connected to the inner sidewall of the first housing and a side of the second housing that faces the first housing in a sealing manner.

37. The fan apparatus according to claim 26, wherein the muffling hole is disposed on a cavity wall of the resonant cavity that faces the fan blade unit.

38. The fan apparatus according to claim 37, wherein the muffling hole is located at a central location of the resonant cavity, or the muffling hole is disposed deviating from the central location of the resonant cavity.

39. The fan apparatus according to claim 26, wherein the first housing and the second housing are sequentially arranged along an axial direction of the fan blade unit.

40. The fan apparatus according to any one of claims 26 to 39, wherein the resonant cavity and the fan blade unit are located on a same side of the first housing.

41. The fan apparatus according to claim 40, wherein the first housing is provided with a first mounting cavity; the fence member is located in the first mounting cavity; a space, in the first mounting cavity, on a side of the fence member that faces the fan blade unit forms the accommodating cavity; and a space, in the first mounting cavity, on a side of the fence member that faces away from the fan blade unit forms the resonant cavity together with the second housing.

42. The fan apparatus according to claim 41, wherein the muffling hole is a through hole on the fence portion of the fence member.

43. The fan apparatus according to any one of claims 26 to 39, wherein the resonant cavity and the fan blade unit are located on two opposite sides of the first housing.

44. The fan apparatus according to claim 43, wherein the first housing is provided with a second mounting cavity, the fence member is located in the second mounting cavity, and the second mounting cavity and the accommodating cavity are located on two opposite sides of the first housing.

45. The fan apparatus according to claim 44, wherein the muffling hole is a through hole on a cavity wall on a side of the resonant cavity that faces the fan blade unit, and the second mounting cavity communicates with the accommodating cavity through the muffling hole.

46. The fan apparatus according to any one of claims 26 to 39, wherein the first housing is provided with an air outlet on a side of the fan blade unit, and the fence member is located on a side of the fan blade unit that is away from the air outlet.

47. The fan apparatus according to claim 46, wherein the fan apparatus is further provided with an air inlet on a same side as the fan blade unit, the air inlet communicates with the accommodating cavity, and an included angle exists between the air inlet and the air outlet.

48. The fan apparatus according to any one of claims 26 to 39, further comprising a sound insulation film disposed on a cavity wall of the resonant cavity, and the sound insulation film is covered on an end of the muffling hole that faces the fan blade unit.

49. The fan apparatus according to any one of claims 26 to 39, wherein the resonant cavity is further provided with a sound absorbing member, and the sound absorbing member is filled in the resonant cavity or the sound absorbing member is disposed on a cavity wall of the resonant cavity.

FIG. 1

100

50

40

30

20

60

FIG. 2

100

212

70

211

21

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

**INTERNATIONAL SEARCH REPORT**

| International application No. |
| --- |
| **PCT/CN2022/113837** |

**A. CLASSIFICATION OF SUBJECT MATTER**

F04D 29/40(2006.01)i; F04D 29/66(2006.01)n; G06F 1/20(2006.01)n

According to International Patent Classification (IPC) or to both national classification and IPC

**B. FIELDS SEARCHED**

Minimum documentation searched (classification system followed by classification symbols)

F04D29/-; G06F1/-

Documentation searched other than minimum documentation to the extent that such documents are included in the fields searched

Electronic data base consulted during the international search (name of data base and, where practicable, search terms used)

WPABSC; CNTXT; CNKI: 荣耀, 杨涛, 风扇, 共振腔, 音腔, 消音, 降噪, 消声, 孔, 开口, 亥姆霍兹, 位置, 频率; WPABS; ENTXT; DWPI: honor, fan?, resonan+, chamber?, room, cavity?, volume, hole?, opening?, frequen+

**C. DOCUMENTS CONSIDERED TO BE RELEVANT**

| Category* | Citation of document, with indication, where appropriate, of the relevant passages | Relevant to claim No. |
| --- | --- | --- |
| PX | CN 114165481 A (HONOR TERMINAL CO., LTD.) 11 March 2022 (2022-03-11) description, paragraphs 0076-0160, and figures 1-15 | 1-49 |
| X | CN 108071601 A (INVENTEC TECHNOLOGY CO., LTD. et al.) 25 May 2018 (2018-05-25) description, paragraphs 0040-0052, and figures 1-6 | 1-25 |
| Y | CN 108071601 A (INVENTEC TECHNOLOGY CO., LTD. et al.) 25 May 2018 (2018-05-25) description, paragraphs 0040-0052, and figures 1-6 | 26-49 |
| Y | CN 103137120 A (YAMAHA CORPORATION) 05 June 2013 (2013-06-05) description, paragraphs 0003-0075, and figures 1-9 | 26-49 |
| A | FR 2780454 A1 (VALEO CLIMATISATION) 31 December 1999 (1999-12-31) entire document | 1-49 |
| A | CN 212429343 U (XI'AN SHAANGU POWER CO., LTD.) 29 January 2021 (2021-01-29) entire document | 1-49 |
| A | CN 204511974 U (ACER INC.) 29 July 2015 (2015-07-29) entire document | 1-49 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **21 October 2022** | **21 November 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/113837**

| Patent document cited in search report | | | Publication date (day/month/year) | Patent family member(s) | | | Publication date (day/month/year) |
|---|---|---|---|---|---|---|---|
| CN | 114165481 | A | 11 March 2022 | None | | | |
| CN | 108071601 | A | 25 May 2018 | US | 2018135654 | A1 | 17 May 2018 |
| CN | 103137120 | A | 05 June 2013 | EP | 2597637 | A1 | 29 May 2013 |
| | | | | US | 2013126268 | A1 | 23 May 2013 |
| | | | | JP | 2013109189 | A | 06 June 2013 |
| | | | | US | 8714303 | B2 | 06 May 2014 |
| | | | | JP | 5834816 | B2 | 24 December 2015 |
| | | | | CN | 103137120 | B | 27 January 2016 |
| FR | 2780454 | A1 | 31 December 1999 | FR | 2780454 | B1 | 26 January 2001 |
| CN | 212429343 | U | 29 January 2021 | CN | 111734686 | A | 02 October 2020 |
| CN | 204511974 | U | 29 July 2015 | None | | | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111070740